# FASCICULE DE BREVET EUROPEEN

(11) **EP 3 746 334 B1**
(45) Date de publication et mention de la délivrance du brevet: **17.11.2021**
(21) Numéro de dépôt: 19704661.8
(22) Date de dépôt: 18.01.2019
(51) Int. Cl.: B60R 1/00

(54) **EMBASE SUPPORT POUR LA FIXATION D'UN CACHE DE PIED DE RÉTROVISEUR INTÉRIEUR CONTRE LE PARE-BRISE D'UN VÉHICULE**
TRÄGERBASIS ZUR BEFESTIGUNG EINER ABDECKUNG FÜR DEN BODEN EINES INNENRÜCKPIEGELS AN DER WINDSCHUTZSCHEIBE EINES KRAFTFAHRZEUGES
SUPPORT BASE FOR FASTENING A COVER FOR THE BASE OF AN INTERIOR REAR-VIEW MIRROR TO THE WINDSHIELD OF A VEHICLE

(30) Priorité: 02.02.2018 FR 1850875
(43) Date de publication de la demande: 09.12.2020
(73) Titulaire: PSA Automobiles SA, 78300 Poissy (FR)
(72) Inventeur: DEIVANAYAGAME, Anandakirouchenane, 91280 ST PIERRE DU PERRAY (FR); JEUFFE, Gerard, 78580 BAZEMONT (FR); JOURDAN, Laurent, 94000 CRETEIL (FR); CIESIELSKI, Laurent, 92140 CLAMART (FR)
(86) Numéro de dépôt international: PCT/FR2019/050112
(87) Numéro de publication internationale: WO 2019/150013

(56) Documents cités:
- US-B2- 7 041 965

## Description

### Domaine de l'invention

La présente invention concerne une embase support servant à la fixation d'un cache de pied de rétroviseur intérieur contre le pare-brise d'un véhicule automobile.

### Arrière-plan de l'invention

De nos jours, les véhicules automobiles sont équipés en série de capteurs de pluie fixés contre la face interne du pare-brise à proximité du rétroviseur intérieur et permettant d'assurer une gestion automatique des essuie-glaces avant en fonction de la quantité d'eau se déposant sur le pare-brise.

De plus en plus de véhicules sont également dotés d'une caméra implantée également contre la face interne du pare-brise à proximité du rétroviseur intérieur et du capteur de pluie, et surveillant l'environnement au devant du véhicule (notamment les autres véhicules et les lignes de marquage au sol de sorte à permettre d'assister le conducteur dans le respect des distances de sécurité et le maintien de sa trajectoire.

Tel qu'illustré notamment dans la demande de brevet US 7,041,965, le pied de fixation du rétroviseur intérieur, le capteur de pluie et éventuellement la caméra de surveillance sont généralement dissimulés par un cache en forme de dôme creux fixé contre le pare-brise par l'intermédiaire d'une embase support collée au pare-brise et sur laquelle ce cache vient se monter par encliquetage.

Une telle embase support comporte classiquement une plaque en forme de U comprenant deux branches latérales sensiblement parallèles reliées par une traverse et présentant une face de collage prévue pour être collée contre la face intérieure dudit pare-brise, ainsi que deux pans latéraux s'étendant chacun depuis une dite branche latérale respective de la plaque à l'opposé de ladite face de collage, chaque dit pan latéral comprenant des moyens d'encliquetage femelles prévus pour coopérer avec des moyens d'encliquetage mâles complémentaires ménagés sur ledit cache de sorte à fixer ce dernier contre ledit pare-brise.

Le montage d'un tel cache s'avère particulièrement délicat pour l'opérateur, notamment à cause de la présence dans les zones d'encliquetage du faisceau pavillon alimentant électriquement le rétroviseur intérieur, le capteur de pluie et éventuellement la caméra de surveillance.

Ce faisceau qui chemine le long du support a ainsi tendance à interférer avec les moyens d'encliquetage mâles du cache lors de leur clipsage dans les moyens femelles de l'embase support, ce qui complique ces opérations et peut engendrer des détériorations de ce faisceau électrique (déchirement de la gaine périphérique de protection et/ou sectionnement de certains conducteurs) entrainant des dysfonctionnements sur les dispositifs électriques.

Afin de palier à ce problème, une solution connue consiste à augmenter le volume en largeur de l'embase support et du cache mais cela a pour inconvénients de réduire la visibilité du conducteur (une surface plus importante du pare-brise étant alors recouverte) et d'avoir un impact négatif sur le niveau de qualité perçue par les usagers.

Par ailleurs, dans certaines situations de roulage (par exemple au passage d'un ralentisseur ou dos d'âne), le faisceau pavillon d'alimentation électrique a tendance a entrer en contact contre la face intérieure du cache, ce qui génère des bruits de claquement désagréables influant également de manière négative sur le niveau de qualité perçue par les usagers.

### Objet et résumé de l'invention

La présente invention vise donc à améliorer la situation.

Elle propose à cet effet une embase support pour la fixation d'un cache de pied de rétroviseur intérieur contre le pare-brise d'un véhicule, comportant une plaque en forme de U comprenant deux branches latérales sensiblement parallèles reliées par une traverse et présentant une face de collage prévue pour être collée contre la face intérieure dudit pare-brise, ainsi que deux pans latéraux s'étendant chacun depuis une dite branche latérale respective de la plaque à l'opposé de ladite face de collage, ces pans comprenant des moyens d'encliquetage femelles prévus pour coopérer avec des moyens d'encliquetage mâles complémentaires ménagés sur ledit cache de sorte à fixer ce dernier contre ledit pare-brise ;
caractérisée en ce qu'elle comporte également des moyens de guidage ménagés au niveau du pan d'une première dite branche latérale et destinés à coopérer avec un faisceau électrique d'alimentation pour guider son cheminement le long de cette branche, lesdits moyens de guidage étant en outre agencés de manière à être décalés suivant une direction perpendiculaire à ladite plaque par rapport aux moyens d'encliquetage femelles de ce pan.

La présence de ces moyens de guidage sur l'embase permet de faciliter le montage du cache sur cette dernière.

Le fait que les moyens de guidage soient décalés vis-à-vis de ces moyens d'encliquetage femelles permet en outre d'éviter que les moyens d'encliquetage mâles ne puissent venir interférer avec le faisceau électrique lors du montage du cache sur l'embase selon l'invention.

Selon des caractéristiques préférées de l'embase support selon l'invention, prises seules ou en combinaison :
- lesdits moyens de guidage comprennent au moins une échancrure ménagée à l'extrémité libre d'un premier muret transversal s'étendant à l'opposé de ladite face de collage depuis la dite première branche latérale ;
- lesdits moyens de guidage comprennent deux dites échancrures ménagées aux extrémités libres de deux dits murets transversaux situés en regard l'un de l'autre ;
- lesdits moyens de guidage comprennent une découpe en forme de lyre apte à assurer également le bridage dudit faisceau, ladite découpe étant ménagée dans un muret transversal s'étendant en regard dudit premier muret depuis la dite première branche latérale ;
- lesdits pans latéraux comprennent également des moyens de centrage femelles prévus pour coopérer avec des moyens de centrage mâles complémentaires ménagés sur ledit cache de sorte à limiter les jeux entre et ladite embase et ce cache après son montage ;
- lesdits moyens de guidage sont également décalés suivant une direction perpendiculaire à ladite plaque par rapport aux moyens de centrage femelles du pan de la dite première branche latérale ;
- ladite embase comporte des moyens spécifiques de bridage dudit faisceau s'étendant depuis ladite première branche latérale à l'opposé de ladite face de collage ;
- lesdits moyens spécifiques de bridage comportent une cornière comprenant une paroi proximale s'étendant depuis et perpendiculairement au bord interne de ladite première branche latérale, ainsi qu'une paroi distale s'étendant du côté externe parallèlement à cette première branche latérale ;
- ladite embase comporte au moins un caisson d'enfichage s'étendant depuis l'une desdites branches latérales de la plaque à l'opposé de ladite face de collage et prévu pour recevoir un connecteur correspondant ménagé à l'extrémité libre d'un câble électrique issu dudit faisceau ; et/ou
- ladite face de collage de la plaque comprend une pluralité de protubérances de même épaisseur réparties de manière sensiblement uniforme sur l'ensemble de sa surface.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 illustre la partie centrale supérieure de l'habitacle d'un véhicule automobile comportant un cache apposé contre le pare-brise et dissimulant le pied de fixation du rétroviseur intérieur, un capteur de pluie ainsi qu'une caméra de surveillance ;
- la figure 2 est une vue en perspective de dessus du cache de la figure 1 dans sa configuration montée sur une embase support conforme à un premier mode de réalisation de l'invention ;
- la figure 3 est une vue en perspective de dessus de l'embase support de la figure 2 ;
- la figure 4 représente une vue en perspective de dessous de l'embase support de la figure 2 ;
- la figure 5 est une vue agrandie de l'une des zones d'encliquetage du cache sur l'embase support ;
- la figure 6 représente une vue en perspective de dessus de l'embase support de la figure 2 et du faisceau électrique destiné à alimenter le rétroviseur intérieur, le capteur de pluie et la caméra de surveillance ;
- la figure 7 représente une vue en perspective de dessus d'une embase support conforme à un second mode de réalisation de l'invention ; et/ou
- la figure 8 représente une vue en perspective de dessous de l'embase support de la figure 7 et du faisceau électrique destiné à alimenter le rétroviseur intérieur, le capteur de pluie et la caméra de surveillance.

### Description détaillée de plusieurs modes préférés de réalisation

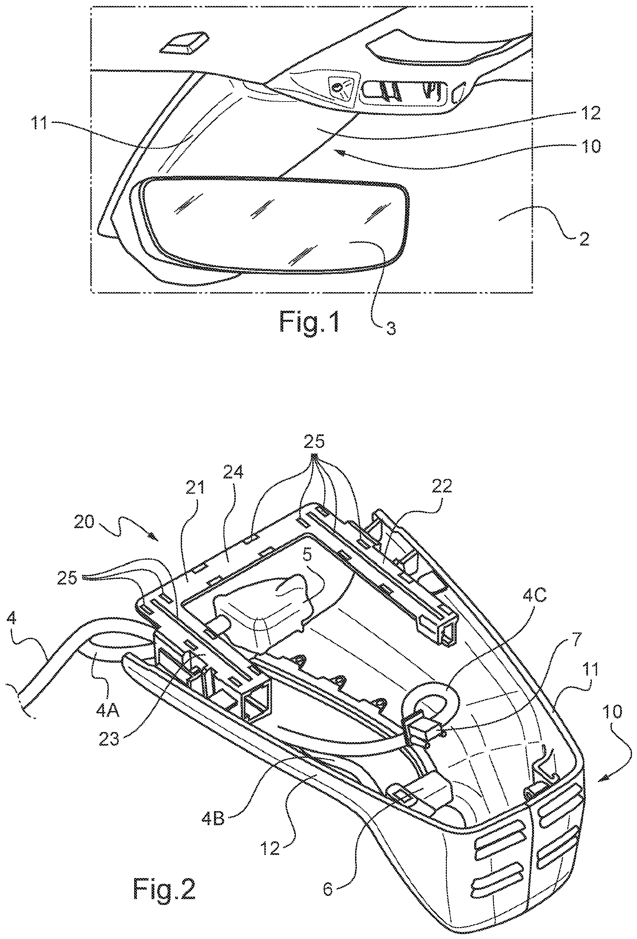

En référence à la figure 1, l'habitacle d'un véhicule automobile comporte un cache creux en forme de dôme 10 constitué de deux parties en matière plastique sensiblement symétriques 11, 12 assemblées l'une à l'autre et dont l'extrémité avant ouverte est fixée de manière amovible contre la face intérieure de la zone centrale de la partie supérieure du pare-brise 2.

Le cache 10 est destiné à dissimuler le pied de fixation du rétroviseur intérieur 3 ainsi qu'un capteur de pluie et éventuellement une caméra de surveillance (non visibles) fixés également contre la face interne du pare-brise 2, ces dispositifs étant alimentés électriquement par l'intermédiaire de câbles électriques 4A, 4B, 4C pourvus à leur extrémité libre de connecteurs de branchement 5, 6, 7 et issus d'un même faisceau électrique d'alimentation 4 cheminant partiellement à l'intérieur de ce cache 10 (voir figure 2).

Tel qu'illustré sur la figure 2, la fixation amovible de l'extrémité avant de ce cache 10 contre le pare-brise 2 est permise grâce à une embase support 20 selon l'invention collée contre la face intérieure de ce pare-brise 2.

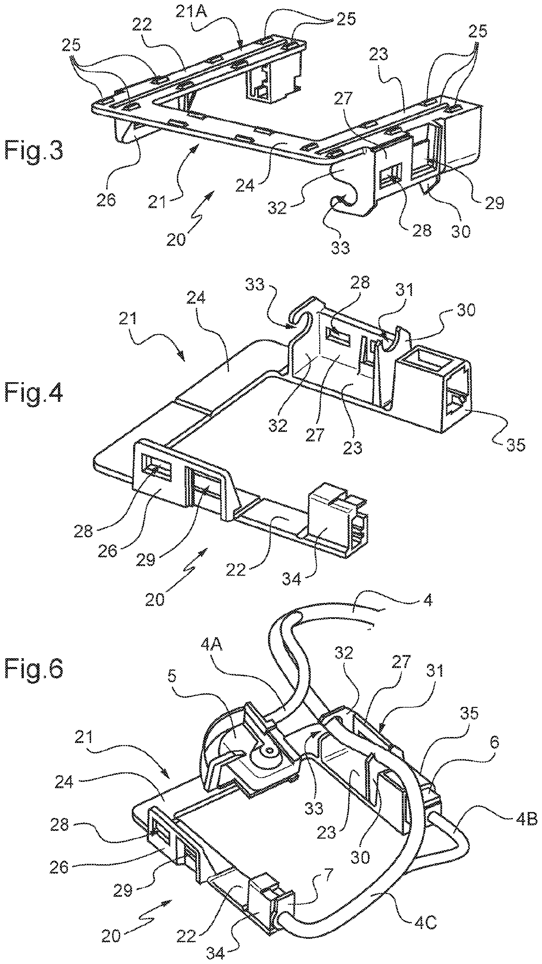

On va maintenant décrire, à l'appui des figures 3 à 6, cette embase 20 conforme à un premier mode de réalisation préféré de l'invention.

Dans la suite de la description et par convention, les termes « inférieur », « supérieur », « longitudinal » « latéral » et « transversal » seront définis par rapport à la position de montage de l'embase de fixation 20 dans l'habitacle d'un véhicule.

Les termes « externe » et « interne » seront quant à eux utilisés pour définir la position relative d'un élément par référence au plan longitudinal médian de cette embase 20. L'élément le plus proche de ce plan médian sera ainsi qualifié d'interne par opposition à l'autre élément plus éloigné de ce même plan qui sera quant à lui qualifié d'externe.

L'embase 20 est venue avantageusement de moulage d'une seule pièce à partir d'un polymère thermoplastique tel que le polypropylène, le polyamide ou l'ABS (Acrylonitrile Butadiène Styrène) : ces matériaux présentant les avantages d'être à la fois légers et relativement élastiques.

Elle comporte une plaque 21 en forme de U comprenant deux branches latérales 22, 23 sensiblement parallèles et reliées à l'une de leurs extrémités par une traverse 24.

La face 21A de cette plaque 21, destinée à être collée contre la face intérieure du pare-brise 2, comprend une pluralité de protubérances 25 de même épaisseur constituées en l'espèce par des nervures et réparties de manière sensiblement uniforme sur l'ensemble de sa surface de sorte à permettre d'améliorer la tenue du collage en assurant une uniformité de l'épaisseur de la couche de colle (ou de la résine de liaison) entre le pare-brise 2 et la plaque 21.

L'embase 20 comporte également deux pans latéraux 26, 27 s'étendant, en regard l'un de l'autre, chacun depuis et perpendiculairement au bord externe d'une branche latérale respective 22, 23 de la plaque 21, et à l'opposé de la face de collage 21A.

Chaque pan latéral 26, 27 comprend des moyens d'encliquetage femelles 28 prévus pour coopérer avec des moyens d'encliquetage mâles complémentaires 13 ménagés sur une partie correspondante 11, 12 du cache creux 10 afin de permettre de fixer ce dernier de manière amovible contre le pare-brise 2.

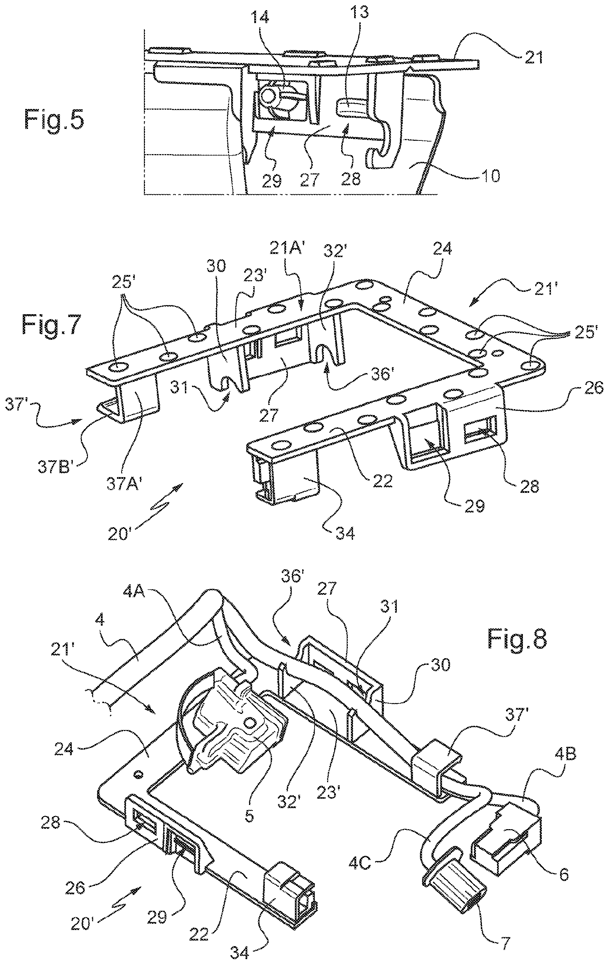

En l'espèce, ces moyens d'encliquetage femelles sont constitués par deux fenêtres rectangulaires 28 (voir figure 4) ménagées respectivement dans chacun des deux pans latéraux 26, 27, tandis que les moyens mâles d'encliquetage sont constitués par deux harpons 13 saillant respectivement de la face intérieure de chacune des deux parties 11, 12 du cache creux 10 (voir figure 5).

Chaque pan latéral 26, 27 comprend également des moyens de centrage femelles 29 prévus pour coopérer avec des moyens de centrage mâles complémentaires 14 ménagés sur une partie correspondante 11, 12 du cache creux 10 afin d'éviter (ou tout du moins de limiter considérablement) les jeux entre l'embase 20 et le cache 10 après son montage sur cette dernière.

En l'espèce, ces moyens de centrage femelles sont constitués par deux fenêtres rectangulaires 29 (de plus grande dimension que les fenêtres 28) ménagées respectivement dans chacun des deux pans latéraux 26, 27 à proximité d'une fenêtre correspondante 28, tandis que les moyens de centrage mâles sont constitués par deux colonnettes 14 saillant respectivement de la face intérieure de chacune des deux parties 11, 12 du cache creux 10 et dont la périphérie extérieure est pourvue d'ailettes réparties angulairement de manière régulière (voir figure 5).

L'embase 20 comporte également des moyens de guidage 31, 33 ménagés au niveau du pan 27 de la branche latérale 23 et destinés à coopérer avec le faisceau 4 alimentant électriquement le rétroviseur intérieur 3, le capteur de pluie et la caméra de surveillance de sorte à guider son cheminement le long de cette branche (voir figures 3, 4).

Les moyens de guidage comportent une première échancrure en arc de cercle 31 ménagée à l'extrémité libre d'un premier muret transversal 30 s'étendant depuis la branche latérale 23 à l'opposé de la face de collage 21A et perpendiculairement à cette dernière ainsi qu'au pan correspondant 27.

Ces moyens de guidage comportent également une découpe en forme de lyre 33 ménagée à proximité de l'extrémité libre d'un second muret transversal 32 s'étendant en regard du muret 30 depuis la branche latérale 23 et perpendiculairement à cette dernière ainsi qu'au pan correspondant 27.

Tel qu'illustré sur la figure 6, cette découpe 33 débouchant sur le bord interne de ce second muret 32 est également apte à assurer, en plus de sa fonction de guidage, le bridage du faisceau 4 ce qui permet d'éviter l'apparition, durant les phases de roulage du véhicule, de bruits de claquement désagréables causés par les contacts répétés entre ce faisceau 4 et la face intérieure du cache 10.

Afin d'éviter que l'harpon d'encliquetage 13 et/ou la colonnette de centrage 14 de la partie 12 du cache 10 ne puissent venir interférer avec le faisceau électrique 4 lors du montage de ce cache 10 sur l'embase 20, on remarquera à l'appui des figures 3 à 6 que ces moyens de guidage 31, 33 sont agencés de manière à être décalés suivant une direction perpendiculaire à la plaque 21 par rapport aux deux fenêtres 28, 29 du pan latéral 27 (ces derniers étant en l'espèce plus écartés de la plaque 21 que ne le sont ces fenêtres 28, 29).

De manière avantageuse et afin d'assurer un guidage du faisceau sur une distance de guidage, les deux murets transversaux 30, 32 s'étendent respectivement au droit des deux extrémités du pan latéral 27.

L'embase 20 comporte également deux caissons d'enfichage 34, 35 s'étendant chacun depuis l'extrémité libre d'une branche latérale correspondante 22, 23 de la plaque à l'opposé de la face supérieure de collage 21A.

Tel qu'illustré par la figure 6, ces deux caissons 34, 35 sont prévus pour recevoir les connecteurs 6, 7 des câbles 4B, 4C du faisceau 4 (ceux normalement destinés à venir se brancher respectivement sur le capteur de pluie et le rétroviseur intérieur) lorsque le véhicule est dépourvu d'un tel capteur de pluie et que son rétroviseur intérieur n'est pas de type électrochromatique, de sorte à éviter l'apparition, durant les phases de roulage du véhicule, de bruits de claquement désagréables causés par les contacts répétés entre ces connecteurs 6, 7 et la face interne du cache 10.

La présence de ces caissons 34, 35 permet ainsi d'utiliser une unique référence d'embase pour l'ensemble des versions d'un même modèle de véhicule, ce qui permet d'assurer une réduction des coûts de revient par effet volume ainsi qu'une optimisation des frais de gestion et de stockage par la diminution du nombre de références à gérer.

On va maintenant décrire rapidement un deuxième de réalisation de l'embase selon l'invention à l'appui des figures 7 et 8. Dans la suite et sur les dessins, on a gardé les mêmes références pour les éléments identiques, tandis que les éléments similaires sont affublés d'un prime.

L'embase 20' illustrée sur ces figures est semblable à l'embase 20 décrite précédemment à l'exception des éléments évoqués ci après.

Ainsi, les protubérances de même épaisseur ménagées sur la face supérieure de collage 21A' de la plaque 21' sont ici formées par des bossages en forme de portion de sphère 25' ;

Les moyens de guidage prévus sur le second muret transversal 32' sont également différents et constitués en l'espèce par une échancrure en arc de cercle 36' ménagée à l'extrémité libre de ce muret 32' et semblable à celle 31 ménagée à l'extrémité libre du premier muret transversal 30.

Enfin, l'embase 20' comporte, en lieu et place du caisson d'enfichage 35, des moyens spécifiques de bridage pour le faisceau 4 constitués par une cornière 37'.

Cette cornière de bridage 37' comprend une paroi proximale 37A' s'étendant depuis et perpendiculairement au bord interne de la seconde branche latérale 23' de la plaque 21' à l'opposé de la face supérieure de collage 21A', ainsi qu'une paroi distale 37B' s'étendant du côté externe parallèlement à cette seconde branche latérale 23' de la plaque 21'.

Selon des variantes de réalisation non représentés de l'invention, les moyens de guidage sont conformés autrement et/ou leur nombre est différent.

Ces derniers pourraient ainsi par exemple comporter deux échancrures telles que 31 et 36' ménagées aux extrémités libres de deux murets transversaux tels que 30 et 32', ainsi qu'une découpe telle que 33 ménagée dans un troisième muret transversal tels que 32.

D'une manière générale, on rappelle que la présente invention ne se limite pas aux formes de réalisation décrites et représentées, mais qu'elle englobe toute variante d'exécution à la portée de l'homme du métier.

## Revendications

1. Embase support pour la fixation d'un cache (10) de pied de rétroviseur intérieur (3) contre le pare-brise (2) d'un véhicule, comportant une plaque en forme de U (21 ; 21') comprenant deux branches latérales sensiblement parallèles (22, 23 ; 22, 23') reliées par une traverse (24) et présentant une face de collage (21A ; 21A') prévue pour être collée contre la face intérieure dudit pare-brise (2), ainsi que deux pans latéraux (26, 27) s'étendant chacun depuis une dite branche latérale respective (22, 23 ; 22, 23') de la plaque (21 ; 21') à l'opposé de ladite face de collage (21A ; 21A'), ces pans (26, 27) comprenant des moyens d'encliquetage femelles (28) prévus pour coopérer avec des moyens d'encliquetage mâles complémentaires (13) ménagés sur ledit cache (10) de sorte à fixer ce dernier contre ledit pare-brise (2) ;
**caractérisée en ce qu'**elle comporte également des moyens de guidage (31, 33 ; 31, 36') ménagés au niveau du pan (27) d'une première dite branche latérale (23 ; 23') et destinés à coopérer avec un faisceau électrique d'alimentation (4) pour guider son cheminement le long de cette branche, lesdits moyens de guidage (31, 33 ; 31, 36') étant en outre agencés de manière à être décalés suivant une direction perpendiculaire à ladite plaque (21 ; 21') par rapport aux moyens d'encliquetage femelles (28) de ce pan (27).

2. Embase support selon la revendication 1, **caractérisée en ce que** lesdits moyens de guidage comprennent au moins une échancrure (31) ménagée à l'extrémité libre d'un premier muret transversal (30) s'étendant à l'opposé de ladite face de collage (21A ; 21A') depuis la dite première branche latérale (23 ; 23').

3. Embase support selon la revendication 2, **caractérisée en ce que** lesdits moyens de guidage comprennent deux dites échancrures (31, 36') ménagées aux extrémités libres de deux dits murets transversaux (30, 32') situés en regard l'un de l'autre.

4. Embase support selon l'une des revendications 1 à 3, **caractérisée en ce que** lesdits moyens de guidage comprennent une découpe en forme de lyre (33) apte à assurer également le bridage dudit faisceau (4), ladite découpe (33) étant ménagée dans un muret transversal (32) s'étendant en regard dudit premier muret (30) depuis la dite première branche latérale (23).

5. Embase support selon l'une des revendications 1 à 4, **caractérisée en ce que** lesdits pans latéraux (26, 27) comprennent également des moyens de centrage femelles (29) prévus pour coopérer avec des moyens de centrage mâles complémentaires (14) ménagés sur ledit cache (10) de sorte à limiter les jeux entre et ladite embase et ce cache après son montage.

6. Embase support selon la revendication 5, **caractérisée en ce que** lesdits moyens de guidage sont également décalés suivant une direction perpendiculaire à ladite plaque (21 ; 21') par rapport aux moyens de centrage femelles (29) du pan (27) de ladite première branche latérale (23 ; 23').

7. Embase support selon l'une des revendications 1 à 6, **caractérisée en ce qu'**elle comporte des moyens spécifiques de bridage (37') dudit faisceau (4) s'étendant depuis ladite première branche latérale (23') à l'opposé de ladite face de collage (21A').

8. Embase support selon la revendication 7, **caractérisée en ce que** lesdits moyens spécifiques de bridage comportent une cornière (37') comprenant une paroi proximale (37A') s'étendant depuis et perpendiculairement au bord interne de ladite première branche latérale (23'), ainsi qu'une paroi distale (37B') s'étendant du côté externe parallèlement à cette première branche latérale (23').

9. Embase support selon l'une des revendications 1 à 8, **caractérisée en ce qu'**elle comporte au moins un caisson d'enfichage (34 ; 34, 35) s'étendant depuis l'une desdites branches latérales (22, 23 ; 22, 23') de la plaque à l'opposé de ladite face de collage (21A ; 21A') et prévu pour recevoir un connecteur correspondant (6, 7) ménagé à l'extrémité libre d'un câble électrique (4B, 4C) issu dudit faisceau (4).

10. Embase support selon l'une des revendications 1 à 9, **caractérisée** en ce ladite face de collage (21A ; 21A') de la plaque (21 ; 21') comprend une pluralité de protubérances de même épaisseur (25 ; 25') réparties de manière sensiblement uniforme sur l'ensemble de sa surface.

## Patentansprüche

1. Trägerbasis zur Befestigung einer Abdeckung (10) eines Innenrückspiegelfußes (3) an der Windschutzscheibe (2) eines Fahrzeugs, mit einer U-förmigen Platte (21; 21') mit zwei im Wesentlichen parallelen Seitenschenkeln (22, 23; 22, 23'), die durch eine Traverse (24) verbunden sind und eine Klebefläche (21A; 21A') vorgesehen ist, um gegen die Innenseite der Windschutzscheibe (2) geklebt zu werden, sowie zwei Seitenwände (26, 27), die sich jeweils von einem jeweiligen Seitenschenkel (22, 23; 22, 23') der Platte (21; 21') gegenüber der Klebefläche (21A; 21A'), wobei diese Flächen (26, 27) weibliche Rastmittel (28) umfassen, die zum Zusammenwirken mit komplementären männlichen Rastmitteln (13) an der Abdeckung (10) vorgesehen sind, um diese an der Windschutzscheibe (2) zu befestigen;
**dadurch gekennzeichnet, dass** sie auch Führungsmittel (31, 33; 31, 36') an der Fläche (27) eines ersten seitlichen Schenkels (23; 23') und zur Zusammenarbeit mit einem elektrischen Versorgungsbündel (4) zur Führung seines Weges entlang dieses Schenkels bestimmt sind, wobei die Führungsmittel (31, 33; 31, 36') in einer Richtung senkrecht zu der Platte (21; 36') versetzt angeordnet sind; 21') gegenüber den weiblichen Rastmitteln (28) dieser Fläche (27).

2. Trägerbasis nach Anspruch 1, **dadurch gekennzeichnet, dass** die Führungsmittel mindestens eine Aussparung (31) umfassen, die am freien Ende einer ersten Querwand (30) ausgebildet ist, die sich gegenüber der Klebefläche (21A) erstreckt; 21A') vom ersten seitlichen Schenkel (23; 23').

3. Trägerbasis nach Anspruch 2, **dadurch gekennzeichnet, dass** die Führungsmittel zwei Aussparungen (31, 36') umfassen, die an den freien Enden von zwei einander gegenüberliegenden Querwänden (30, 32') ausgebildet sind.

4. Trägerbasis nach einem der Ansprüche 1 bis 3, **dadurch gekennzeichnet, dass** die Führungsmittel einen lyrischen Ausschnitt (33) umfassen, der auch das Anflanschen des Bündels (4) gewährleisten kann, wobei der Ausschnitt (33) in einer Querwand (32) ausgebildet ist, die sich gegenüber der ersten Wand (30) von dem ersten seitlichen Schenkel (23) erstreckt.

5. Trägerbasis nach einem der Ansprüche 1 bis 4, **dadurch gekennzeichnet, dass** die Seitenwände (26, 27) auch weibliche Zentriermittel (29) umfassen, die zum Zusammenwirken mit komplementären männlichen Zentriermitteln (14) vorgesehen sind, die auf der Abdeckung (10) ausgebildet sind, um die Abstände zwischen der Basis und dieser Abdeckung nach ihrer Montage zu begrenzen.

6. Trägerbasis nach Anspruch 5, **dadurch gekennzeichnet, dass** die Führungsmittel ebenfalls in einer Richtung senkrecht zu der Platte (21; 21) versetzt sind; 21') in Bezug auf die weiblichen Zentriermittel (29) der Fläche (27) des ersten Seitenschenkels (23; 23').

7. Trägerbasis nach einem der Ansprüche 1 bis 6, **dadurch gekennzeichnet, dass** sie spezifische Befestigungsmittel (37') des Bündels (4) umfasst, die sich von dem ersten seitlichen Schenkel (23') entgegengesetzt zur Klebefläche (21A') erstrecken.

8. Trägerbasis nach Anspruch 7, **dadurch gekennzeichnet, dass** die spezifischen Befestigungsmittel einen Winkel (37') umfassen, der eine proximale Wand (37A'), die sich von und senkrecht zu dem inneren Rand des ersten Seitenschenkels (23') erstreckt, sowie eine distale Wand (37B') umfasst, die sich von der Außenseite parallel zu diesem ersten Seitenschenkel (23') erstreckt.

9. Trägerbasis nach einem der Ansprüche 1 bis 8, **dadurch gekennzeichnet, dass** sie mindestens einen Steckkasten (34; 34, 35) von einem der Seitenschenkel (22, 23; 22, 23') der Platte gegenüber der Klebefläche (21A; 21A') und zur Aufnahme eines entsprechenden Steckverbinders (6, 7) vorgesehen ist, der am freien Ende eines elektrischen Kabels (4B, 4C) vorgesehen ist, das aus dem Bündel (4) herausgeführt ist.

10. Trägerbasis nach einem der Ansprüche 1 bis 9, **dadurch gekennzeichnet, dass** die Klebefläche (21A; 21A') der Platte (21; 21') eine Vielzahl von Vorsprüngen gleicher Dicke (25; 25') im Wesentlichen gleichmäßig über seine gesamte Oberfläche verteilt sind.

## Claims

1. Support base for the attachment of a cover (10) of the foot of an interior rear-view mirror (3) against the windscreen (2) of a vehicle, incorporating a U-shaped plate (21); 21') consisting of two substantially parallel lateral branches (22,23; 22,23') connected by a sleeper (24) and having a side of gluing (21A; (21A') intended to be glued against the inner face of the said windscreen (2), and two side-ends (26,27) each extending from one side of the said respective side-ends (22,23); 22,23') of the plate (21; (21') opposite that side of the adhesive (21A); (21A'), those parts (26, 27) comprising female means of encycling (28) intended to cooperate with additional male means of encycling (13) arranged on that cache (10) in such a way as to secure the latter against that windscreen (2);
**characterized by** means of guidance (31, 33); 31,36') at the pan level (27) of a first so-called lateral branch (23); (23') and intended to cooperate with an electric supply beam (4) to guide its way along that branch, the means of guidance (31, 33; 31,36'), which are further arranged in such a way as to be offset in a direction perpendicular to that plate (21; (21') in relation to the female means of entucking (28) of this plan.

2. Base support in accordance with claim 1, **characterized by** the fact that those means of guidance include at least one gap (31) at the free end of a first transverse wall (30) extending opposite that side of the adhesive (21A); 21A') from the so-called first lateral limb (23); 23').

3. Base support according to claim 2, **characterized by** the fact that those means of guidance comprise two so-called 'shafts' (31,36') at the free ends of two so-called 'transverse walls' (30,32') situated opposite each other.

4. A support base according to one of claims 1 to 3, **characterized in that** said guide means comprise a lyre-shaped cut-out (33) suitable also for clamping said bundle (4), said cut-out (33) being formed in a transverse wall (32) extending opposite said first wall (30) from said first lateral branch (23).

5. A support base according to one of claims 1 to 4, **characterized in that** said side panels (26, 27) also comprise female centering means (29) provided to cooperate with complementary male centering means (14) provided on said cover (10) so as to limit the play between and said base and said cover after its assembly.

6. A support base according to claim 5, **characterized in that** said guide means are also offset in a direction perpendicular to said plate (21; 21') relative to the female centering means (29) of the plane (27) of said first lateral branch (23); 23').

7. Support base according to one of Claims 1 to 6, **characterized in that** it comprises specific clamping means (37') of said beam (4) extending from said first lateral branch (23') opposite said bonding face (21A').

8. A support base according to claim 7, **characterized in that** said specific clamping means comprise an angle (37') comprising a proximal wall (37A') extending from and perpendicular to the inner edge of said first lateral branch (23'), and a distal wall (37B') extending on the outer side parallel to said first lateral branch (23').

9. Support base according to one of Claims 1 to 8, **characterized in that** it comprises at least one plug-in box (34; 34, 35) extending from one of said lateral branches (22, 23; 22, 23') of the plate opposite said bonding face (21A); 21A') and designed to receive a corresponding connector (6, 7) provided at the free end of an electric cable (4B, 4C) coming from said bundle (4).

10. A support base according to one of claims 1 to 9, **characterized in that** said bonding face (21A; 21A') of the plate (21; 21') includes a plurality of protuberances of the same thickness (25; 25') distributed substantially uniformly over its entire surface.
